# EUROPEAN PATENT SPECIFICATION

(11) **EP 0 815 742 B1**
(45) Date of publication and mention of the grant of the patent: **11.04.2007**
(21) Application number: 97110414.6
(22) Date of filing: 25.06.1997
(51) Int. Cl.: A23L 1/0562, A23L 1/31, A23L 1/325, A23L 1/315, A23L 1/314

(54) **Binding composition comprising transglutaminase and collagen, and process for producing bound food products**
Bindemittel enthaltend Transglutaminase und Kollagen, und Verfahren zur Herstellung von gebundenen Nahrungsmittel
Composition liante à base de transglutaminase et de collagène, et procédé de fabrication de produits alimentaires liés

(30) Priority: 01.07.1996 JP 17115596; 26.05.1997 JP 13482597
(43) Date of publication of application: 07.01.1998
(73) Proprietor: Ajinomoto Co., Inc., Tokyo 104 (JP)
(72) Inventor: Chiya, Kuraishi, c/o Ajinomoto Co., Inc., Kawasaki-ku, Kawasaki-shi, Kanagawa-ken (JP); Takahiko, Soeda, c/o Ajinomoto Co., Inc., Kawasaki-ku, Kawasaki-shi, Kanagawa-ken (JP)
(74) Representative: Strehl Schübel-Hopf & Partner

(56) References cited:
- WO-A-97/40701
- PATENT ABSTRACTS OF JAPAN vol. 018, no. 662 (C-1287), 14 December 1994 & JP 06 261712 A (AJINOMOTO CO INC), 20 September 1994
- PATENT ABSTRACTS OF JAPAN vol. 018, no. 597 (C-1273), 15 November 1994 & JP 06 225729 A (AJINOMOTO CO INC), 16 August 1994
- PATENT ABSTRACTS OF JAPAN vol. 014, no. 439 (C-0761), 19 September 1990 & JP 02 171160 A (NIPPI:KK;OTHERS: 01), 2 July 1990
- PATENT ABSTRACTS OF JAPAN vol. 007, no. 268 (C-197), 30 November 1983 & JP 58 149645 A (AJINOMOTO KK), 6 September 1983
- PATENT ABSTRACTS OF JAPAN vol. 018, no. 204 (C-1189), 11 April 1994 & JP 06 007092 A (AJINOMOTO CO INC), 18 January 1994
- A.G.W. JANSSEN: "Marktvertrouwen in vleeshechter groeit" VOEDINGSMIDDELTECHNOLOGIE, vol. 29, no. (14-15), 11 July 1996, page 31 XP002101383 & DATABASE FOODLINE DIALOG File 53 AN 00530149,

## Description

### Detailed Description of the Invention

The present invention relates to the use of an enzyme preparation for binding pieces of food materials and a process for producing bound food.

### Prior Art

In order to create a product which is obtained by the effective use of natural sources or has a high commercial value, a variety of methods have been so far attempted to bind food materials. A known method which has been already disclosed and has put to practical use provides a frozen or heat-treated product in many cases.

Further, the binding strength of the glue has not necessarily been satisfactory, and it has been difficult to bind various materials in various forms with this glue.

In order to solve this problem, Japanese Laid-Open (Kokai) No. 284,867/1994 discloses a method in which food materials are bound by using a combination of a transglutaminase (hereinafter referred to as "TGase") which is an enzyme and caseins (including casein as well as caseinates such as sodium caseinate and calcium caseinate, and a casein partial hydrolyzate).

This method utilizes the introduction of crosslinking between proteins by the enzyme TGase. In this method, caseins as a binder are used in combination with proteins present in food materials per se to exhibit much higher binding strength. According to this method, a raw bound food, for example, raw restructured steak meat can be produced without being frozen or heat-treated.

In recent years, this method has been widely employed not only in Japan but also abroad as a method of producing bound food having a high commercial value.

A technique of producing low-calory and low-salt bound food by adding TGase and caseins such as a casein partial hydrolyzate to animal meat and fish meat has been currently studied.

Methods of binding food materials without using TGase have been reported, and some of them have been put to practical use. For example, a method in which pieces of meat are bound using a combination of (1) a heat-coagulable protein such as a wheat protein or the like and (2) an alkaline earth metal salt of which the solution in water is an alkaline solution, such as calcium oxide, calcium hydroxide or the like is disclosed in Japanese Laid-Open (Kokai) No. 268,665/1990.

However, in view of the taste inherent in meat, the bound food obtained by this method leaves a bitter taste and has a proteinaceous smell. Accordingly, this method is not necessarily desirable.

Further, it has been well known that myosin is eluted with sodium chloride and pieces of meat can be bound using gel-formability of the eluted myosin.

However, since this method requires quite a large amount of sodium chloride, the food gives a strong salty taste. In addition, the salt content is high. Thus, it is not good for reasons of health. In addition, heating has to be conducted for binding. Accordingly, this method can be utilized only in quite limited food.

For the above-mentioned reasons, a method of binding food materials through the crosslinking reaction using TGase is preferable. Above all, the method disclosed in Japanese Laid-Open (Kokai) No. 284,867/1994 is considered to be the most valuable, high technique since bound food which is excellent in taste and flavor can be produced.

It is also possible to produce bound food with TGase alone without using caseins [refer to Japanese 2nd. publication (Koukoku) No. 55,116/1994].

However, the use of TGase alone exhibits a binding strength which is a little inferior to that of the combined use of TGase and caseins. Therefore, the combined use of TGase and caseins has been usually employed. Consequently, caseins are an essential component as a binder for providing an excellent binding ability.

Nevertheless, in recent years, milk proteins cannot be used, in some cases, in producing processed food because of problems such as food allergy and the like. Especially, caseins among milk proteins are known to cause food allergy. Further, in some foreign countries, the use of ingredients other than proteins derived from food materials to be bound is legally controlled in accordance with the form of bound food. For example, in Netherlands, when producing processed beef steak meat, proteins derived from cattle meat, cattle bones or cattle skins can be used as a binder, but caseins derived from milk cannot.

Under such circumstances, a technique in which caseins are not used has also been studied. For example, WO 95/08274 discloses a method in which raw meat is bound by using a combination of TGase with an alkali metal phosphate and sodium chloride as a binder.

However, in this method, it is indispensable to use, based on the weight of meat, 0.4% (weight %) or less of an alkali metal phosphate and as high as from 1.5 to 4% (weight %) of sodium chloride. Thus, a food product that loses a taste and a flavor inherent in meat is provided.

### Problems To Be Solved by the Invention

Under these circumstances, an ideal preparation for binding pieces of food materials by which food materials such as pieces of meat or the like can highly be bound even in unheated raw state without using caseins and a process for producing bound food having excellent taste and flavor have been in demand in the field of processed food.

### Means For Solving the Problems

The present inventors have assiduously conducted investigations to solve the above-mentioned problems, and have consequently found that pieces of food materials can be bound well with collagen without the use of caseins. This finding has led to the completion of the present invention.

That is, the present invention relates to
1) the use of an enzyme preparation for binding pieces of food materials, the enzyme preparation comprising transglutaminase and a collagen as active ingredients, wherein the collagen is extracted from (1) an animal bone and/or an animal skin, (2) the protein fraction having a molecular weight of approximately 40,000 Da or more being more than 70% by weight of the total protein in said collagen, and (3) the protein fraction having a molecular weight of approximately 65,000 Da or more being more than 50% by weight of the total protein in said collagen, and
2) to a process for producing bound food by reacting pieces of food materials with transglutaminase, wherein collagen is used as a binder, said collagen being in the form of a glue obtained by adding collagen to water of 10°C or less, and said collagen being extracted from (1) an animal bone and/or an animal skin, (2) the protein fraction having a molecular weight of approximately 40,000 Da or more being more than 70% by weight of the total protein in said collagen, and (3) the protein fraction having a molecular weight of approximately 65,000 Da or more being more than 50% by weight of the total protein in said collagen.

The present invention is described in detail below.

### Mode of Carrying Out the Invention

The present invention is characterized in that in addition to the enzymatic function of TGase, collagen is used as a binder.

TGase is an enzyme which catalyses the acyl transfer reaction between the γ-carboxyamide group of peptide- or protein bound glutaminyl residues and primary amines, and which forms an ε-(γ-Glu)Lys crosslink when the primary amine is a lysyl residue of a protein.

So long as TGase used in the present invention has a TGase activity, its origin is not particularly limited. Examples of TGase include TGase derived from microorganisms such as the genus Streptoverticillium and the like [hereinafter abbreviated as "BTGase"; refer to Japanese Laid-Open (Kokai) No. 27,471/1989 and U. S. Patent No. 5,156,956)], TGase derived from mammals such as a guinea pig [refer to Japanese Laid-Open (Kokai) No. 14,964/1983], TGase derived from fish such as a cod or the like [Seki Nobuo et al., Nippon Suisan Gakkaishi, vol. 56, No.1, p. 125 (1990)], TGase present in blood (called also Factor XIII), and TGase produced through the gene recombination [refer to, for example, Japanese Laid-Open (Kokai) Nos. 300,889/1989, 199,883/1993 and 225,775/1994, and WO 93/15234 and so forth].

The above-mentioned examples of TGase are all available in the present invention. Especially, TGase derived from microorganisms can preferably be used because it can be mass-produced industrially and is available with low cost.

The amount of TGase in the present invention is not particularly limited. It is usually between 0.01 U and 100 U, preferably between 0.1 U and 50 U per gram of a food raw material to be bound.

The optimum amount of TGase varies depending on the type, size and form of the food material and the form of the final product. The appropriate amount of TGase can be determined through previous experiments based on the above-mentioned range.

The activity unit of TGase referred to in the present invention is measured and defined by the following hydroxamate method. That is, TGase functions in a reaction system containing benzyloxycarbonyl-L-glutamylglycine and hydroxylamine as substrates in a Tris buffer of pH 6.0 at a temperature of 37°C, and hydroxamic acid formed is converted into a ferric complex in the presence of trichloroacetic acid. Then, an absorbance at 525 nm of the reaction system is measured, and the amount of hydroxamic acid formed is calculated using a calibration curve. The amount of the enzyme that catalyses formation of 1 µmol of hydroxamic acid in 1 minute is defined as an activity unit of TGase, namely 1 unit (1 U). [Refer to Japanese Laid-Open (Kokai) No. 27,471/1989 and U.S. patent No. 5,156,956.]

The collagen used in the present invention is derived from (1) an animal bone and/or an animal skin, (2) the protein fraction having a molecular weight of approximately 40,000 Da or more being more than 70% by weight of the total protein in this collagen, and (3) the protein fraction having a molecular weight of approximately 65,000 Da or more being more than 50% by weight of the total protein in this collagen. The use of the collagen having the above-mentioned molecular weights remarkably increases the binding effect.

As is understandable from the above-mentioned molecular weights, collagen referred to in the present invention also includes gelatin which is formed through decomposition or modification of collagen. Thus, collagen in the present invention has a wide concept including gelatin.

The origin of collagen is not particularly limited, and generally a bone or a skin of an animal such as cattle, pig, poultry, sheep, goat or the like can be used.

Further, collagen is not necessarily a purified product, and collagen containing a fat, a carbohydrate, a peptide, an amino acid and the like is also available.

Collagen is usually extracted from an animal bone and/or an animal skin, and purified. During extraction and purification, collagen is hydrolyzed to various extent. Accordingly, it has a wide-ranging molecular weight distribution.

In order to obtain the collagen having the above-mentioned molecular weights, the molecular weights are measured in the following manner.

A method of fractionating a protein according to molecular weights through molecular sieves, for example, gel filtration or SDS-PAGE (SDS-polyacrylamide gel electrophoresis) can be employed. The molecular weights of the fractions can be estimated using a commercial molecular weight marker.

Of course, the definition of the effective molecular weights is somewhat changed depending on a measuring method. Further, the molecular weights measured usually involve an error of approximately 5%. Anyway, the collagen having the above-mentioned molecular weights, even though it is measured by any measuring method, exhibits sufficient binding effect.

In the present invention, the molecular weights of collagen were measured through SDS-PAGE to clarify the relation between the molecular weights and the binding strength.

Consequently, when using collagen composed mainly of a fraction having a low molecular weight, the binding effect is decreased. This is presumably because the reactivity with TGase is reduced owing to the low molecular weight.

For example, a hydrolyzate of an animal protein (trade name: "CEBAPRO C" in which more than 90% (weight %) of the overall material is composed of a peptide or an amino acid having a molecular weight of 5,000 Da or less) is approximately the same as collagen (trade name: "SCANPRO T 95") which is effective in the present invention in terms of amino acids composition, but the molecular weight is too low. Accordingly, the binding effect is extremely low.

Collagen in the reaction system is used in such an amount that it can serve as a substrate of an enzyme and as a binder. This amount is usually between 0.1 and 5 parts by weight, preferably between 0.5 and 2 parts by weight per 100 parts by weight of the food materials to be bound.

When it is much smaller than the above defined range, the binding effect given when using collagen and TGase is the same as that given when using TGase alone. Meanwhile, when it is much larger than the above defined range, a thick protein membrane is formed between the food materials. This is undesirable in view of the eating feel and the binding strength. Of course, the above-mentioned amount is a tentative standard, and it is not critical.

The proportions of TGase and collagen which are essential ingredients of the enzyme preparation for use in the binding of food materials in the present invention are not particularly limited. The proportion of collagen is usually between 20 and 80 parts by weight per 100 parts by weight of the enzyme preparation. The proportion of TGase is usually between 1 and 200 U, preferably between 10 and 150 U per gram of the enzyme preparation.

In the enzyme preparation used in the present invention, TGase and collagen are not necessarily blended and packed in one container. They may be packed in different containers in the form of a so-called "kit".

The enzyme preparation used in the present invention comprises TGase and collagen as essential active ingredients, and it may further contain the following additives.

For example, it may contain a food excipient. Examples thereof include lactose, sucrose, maltit, sorbitol, dextrin, branched dextrin, cyclodextrin, starches, polysaccharide, gums and pectin.

Further, the enzyme preparation used in the present invention can also contain proteins except caseins. Examples thereof include a protein (a mixture of gelatin, myosin and the like) extracted with water from meat such as pork, beef, mutton or fowl, a protein obtained by forming the above-mentioned meat into a paste using a chopper, a soybean protein and a wheat protein and so forth.

In view of the allergy caused by the bound food, however, it would be advisable to refrain from incorporating the strongly antigenic soybean protein and wheat protein into the enzyme preparation as much as possible.

Further, the enzyme preparation used in the present invention may contain salts such as sodium bicarbonate, sodium citrate, sodium phosphate, sodium chloride and potassium chloride and so on.

Still further, the enzyme preparation used in the present invention may contain a seasoning, sugar, a flavor, a coloring agent, a color fixative, ascorbic acid and its salt, an emulsifying agent, fats and oils and so on.

As stated above, the enzyme preparation used in the present invention is characterized in that 1) TGase and collagen are comprised as essential ingredients and 2) caseins which have been deemed essential to provide the practical binding strength but which cause the allergy problem are not contained.

There are roughly two processes for producing bound food by binding food materials, namely, a process in which an enzyme preparation comprising TGase and collagen as active ingredients is used as such, and a process in which TGase and collagen are purchased separately and used. These processes are both available.

In both of these processes, the amount of TGase relative to the food materials and the amount of collagen relative to the food materials are the same.

That is, the amount of TGase is usually between 0.01 U and 100 U, preferably between 0.1 U and 50 U per gram of the food materials to be bound. Further, the amount of collagen is usually between 0.1 and 5 parts by weight, preferably between 0.5 and 2 parts by weight per 100 parts by weight of the food materials.

Accordingly, whether TGase and collagen are used in the form of the enzyme preparation or separately from each other, they have to be used in the above-mentioned amounts.

In the present invention, it is important that a glue obtained by adding collagen to cold water of 10°C or less, preferably to cold water of 5°C or less is used as a binder.

The reason for adding collagen to cold water (ice water) of 10°C or less is that especially collagen having the above-mentioned predetermined molecular weights is well dispersed in ice water of 10°C or less, and after dispersed, it is formed into a glue which is easily miscible with food materials. Since this glue is adhered to the surface of the food material uniformly, it serves as a binder to extremely enhance the binding with the other food material by TGase. This is considered to give the final product the high binding strength.

When collagen is added to water held over 10°C, the dispersion state becomes poor (so-called "clumps" are formed), and it can hardly be mixed with the food materials.

In the present invention, it is further important that the weight ratio of ice water to collagen is adjusted to between 6 and 20, preferably between 10 and 14 per 1 of collagen. The reason is that this ratio contributes to remarkably improving the binding strength.

When the ratio of ice water to collagen exceeds 20, the viscosity is lowered owing to the high content of ice water. Meanwhile, when the ratio is less than 6, the viscosity is increased owing to the low content of ice water. In either case, we cannot obtain any glue that exhibits a desirable viscosity for producing bound foods.

A process for producing bound food in accordance with the present invention is described below.

A predetermined amount of collagen is added to ice water of 10°C or less to form a glue. Subsequently, this glue is mixed with food materials and TGase. Since this glue serves as a binder between the food materials, the food materials are bound quite strongly through the function of TGase. The order of mixing the food materials and TGase with the obtained glue is not particularly limited. The glue may be first mixed with the food materials and then with TGase, or vice versa. Further, the food materials and TGase may be mixed with the glue at the same time.

Still further, it is also possible that TGase and collagen are added to ice water of 10°C or less to form a glue, and this glue is then mixed with the food materials.

At this time, TGase and collagen may be used separately. Or, the enzyme preparation of the present invention which has comprised TGase and collagen as essential ingredients may be used.

To put it for reference, in addition to TGase and collagen as essential ingredients, the above-mentioned additives such as a seasoning, sodium chloride, a spice, sugar, an emulsifying agent, sodium bicarbonate, an excipient and the like may be added as required.

When a product is not necessarily limited to low-salt food, sodium chloride is added to a glue obtained by adding collagen to ice water of 10°C or less, so that the binding strength is markedly improved.

The mixture of the glue and the food materials is usually directed to the forming process at once.

In the forming process, the mixture is filled in a ordinary forming container such as a casing tube or the like, and allowed to stand at from 0 to 65°C for from 5 minutes to 24 hours. During that time, TGase acts to obtain desired bound-formed food. The resulting bound-formed food may be heated or frozen as required.

Bound food may be produced by directly coating uniformly (1) an enzyme preparation comprising TGase and collagen as essential ingredients or 2) TGase and collagen separately on surfaces of food materials, though this bound food is slightly inferior in the binding effect compared with the bound food produced by the foregoing process in which the glue obtained by adding collagen to cold water of 10°C or less is used as a binder.

Finally, the food materials used in the present invention is described below.

The food materials may be any proteinaceous food materials. Examples thereof include animal meat such as beef, pork, horsemeat, mutton, goat, rabbit meat and chicken; fish meat; shells; shellfishes such as a shrimp and a crab; mollusk such as a cuttlefish and an octopus; and fish eggs such as salmon roe. Further, processed food such as cheese, noodles or a boiled fish paste can be also applicable.

As mentioned above, any proteinaceous food materials will do, so the above-mentioned materials are not critical.

The present invention can be applied indeed to all of the above-mentioned proteinaceous food materials. When the present invention is utilized in the binding of the animal meat (beef, pork, horsemeat, mutton, goat, rabbit meat and fowl), the remarkable effect can be exhibited particularly.

When the binding of meat is conducted in accordance with the present invention, the binding strength of the practical level can be obtained without using proteins which are likely to cause allergy, such as caseins. Further, the product obtained by the present invention is a processed meat product containing only the meat-derived materials except TGase.

### Examples

The present invention is described specifically by referring to the following Examples. However, the technical scope of the present invention is not limited thereto.

### Example 1

Production of an enzyme preparation for use in binding of food materials:

Two types of enzyme preparations used in the present invention were produced according to a recipe (a) or (b). A commercial transglutaminase (made by Ajinomoto Co., Inc., specific activity 1 U/mg) of the genus Streptoverticillium mobaraense IFO 13819) was used. Further, as collagen, "SCANPRO T 95" (trade name for a product of Protein Foods A/S, Denmark) was used.

"SCANPRO T95" is a material prepared from a pig skin in a usual manner. The analysis of the same through SDS-PAGE revealed that the amount of the protein having a molecular weight of 65,000 Da or more was 67.7% by weight of the total protein and the amount of the protein having a molecular weight of 40,000 Da or more was 75.6% by weight of the total protein.

**Table 1**

| Enzyme preparation | Recipe | |
|---|---|---|
| (a) | collagen | 70 g |
| | branched dextrin | 30 g |
| | TGase | 6,000 U |
| (b) | collagen | 60 g |
| | lactose | 40 g |
| | TGase | 10,000 U |

### Example 2

### Production of bound pork using the enzyme preparation:

Ten grams of the enzyme preparation used in the present invention which was produced in Example 1 were added to, and dispersed in, ice water (3°C) of an amount (weight) which was 7 times as large as that of the enzyme preparation to obtain a glue. This glue was then used as a binder. That is, this glue was uniformly mixed well with a total of 1 kg of small pieces (approximately 2-cm cubes) of ham. Soon, the mixture was filled in a casing tube having a folding width of 75 mm, and allowed to stand at 20°C for 1 hour to produce bound raw pork. The processed pork filled in the casing tube was frozen as such in a freezer of -25°C until the evaluation was conducted. The product formed in the above-mentioned manner except that the enzyme preparation used in the present invention was not added was used as a control.

The frozen bound pork was sliced to a thickness of 9 mm. After this pork was thawed, the binding strength of the raw pork was measured. Both surfaces thereof were baked on a hot plate, and an organoleptic evaluation was conducted.

The results are as follows.

That is, the binding strengths of the raw bound pork products obtained by using the enzyme preparations (a) and (b) were more than 60 g/cm² in terms of the binding strengths. Thus, they retained a fully practical binding strength as bound pork products. Meanwhile, in the control product, the small pieces of meat were not bound at all to one another.

In the grilling, the product of the present invention did not cause delamination of bound surfaces, and had a natural eating feel. Its excellent taste and flavor were the same as those of a product obtained by grilling natural fresh meat.

Since collagen used was derived from pork, the bound pork obtained by using this collagen was the processed meat food containing only pork-derived ingredients except a trace amount of TGase.

### Example 3

Influence of a ratio of ice water to collagen on the binding:

With respect to the enzyme preparation (a) in Table 1, the influence of a ratio of ice water to collagen on the binding was studied. The binding experiment was conducted in the same manner as in Example 2. The results are shown in Table 2.

**Table 2**

| Ratio of ice water (3° C) to collagen | binding strength (g/cm²) |
|---|---|
| 4 | 25 |
| 6 | 50 |
| 8 | 61 |
| 10 | 73 |
| 12 | 78 |
| 14 | 76 |
| 16 | 66 |
| 18 | 64 |
| 20 | 58 |
| 22 | 45 |

As is clear from Table 2, the binding strength varied greatly by changing the ratio of ice water (3°C) to collagen.

That is, when ice water was added at a ratio of from 6 to 20 parts by weight per 1 part by weight of collagen, the binding strength was as high as 50 g/cm² or more.

This was presumably because collagen added to ice water was dispersed therein quite well (the clumps are hardly formed) to form an excellent "glue" which gave rise to the high binding strength.

### Example 4

Production of bound pork:

Ten grams of collagen (trade name: "SCANPRO T 95") described in Example 1 were added to 110 g of ice water (3 °C), and these were mixed well immediately to form a glue. Subsequently, this glue was used as a binder. That is, a total of 1,000 g of small pieces (approximately 2-cm cubes) of ham were charged into this glue, and they were mixed well with each other.

To this was added a mixture obtained by previously dissolving 1,000 U of TGase (powder) into a small amount (5 ml) of water. The small pieces of meat, TGase and the collagen glue were uniformly mixed well (the amount of TGase was 1 U per gram of meat and that of collagen was 0.01 g on the same basis).

Subsequently, this mixture was packed into a casing tube having a folding width of 75 mm, and allowed to stand at 5°C for 4 hours to proceed with the TGase reaction. Then, the reaction mixture was placed in a freezer of -40° C, and frozen until the evaluation was conducted.

As a control, bound pork was prepared by using collagen alone without adding TGase.

The frozen bound pork was sliced to a thickness of 9 mm. After this pork was thawed, the binding strength of the raw bound pork was measured using a rheometer. Both surfaces thereof were baked on a hot plate, and an organoleptic evaluation was conducted.

The results are as follows. That is, the binding strength of the raw bound pork in the present invention was 51 g/cm², and that of the control was 10 g/cm² in terms of the binding strength. The score of 10 g/cm² of the control referred to a binding strength by which the product was barely lifted up, and it was far from the binding strength by which the bound pork product can withstand the practical use. On the other hand, the bound pork product of the present invention could satisfactorily withstand the practical use.

The product of the present invention did not cause delamination of bound surfaces in the grilling, and the eating feel was natural. The taste and flavor thereof were the same as those of a product obtained by grilling natural fresh meat.

### Example 5

### Production of bound pork containing sodium chloride:

Ten grams of collagen (trade name: "SCANPRO T 95") and 1,000 U of TGase were added to 100 g of ice water (5° C) to form a glue. This glue was mixed with 10 g of sodium chloride. Subsequently, this glue as a binder was uniformly mixed well with 1,000 g of small pieces of ham (approximately 2-cm cubes). The resulting mixture was packed into a casing tube having a diameter of 4.5 cm, and allowed to stand at 5°C for 4 hours to proceed with the enzymatic reaction. Subsequently, the reaction product was placed in a freezer of -40°C, and frozen until the evaluation was conducted.

The frozen bound pork was sliced to a thickness of 9 mm. After the pork was thawed, the binding strength of the raw bound port was measured using a rheometer.

When sodium chloride was added, the binding strength of the raw bound pork which was bound by the process of the present invention was 80 g/cm².

The binding strength of the resulting bound food was at least approximately 1.5 times as high as the bound food prepared in exactly the same manner except that no sodium chloride was added. Thus, it proved that the binding strength of the food materials was more increased with the combined use of sodium chloride.

Sodium chloride may be added to the glue of collagen so that the binding effect can be enhanced. A procedure such as tumbling or the like is not altogether necessary, in case where sodium chloride is added. Accordingly, the use of sodium chloride can dispense with the tumbling process. Thus, the working efficiency can be attained.

### Example 6

### Production of processed chicken tender meat fillet:

Ten grams of collagen (trade name: "SCANPRO T 95") were added to 100 g of ice water of 3°C, and they were immediately mixed well. When collagen became a glue, 500 U of TGase (powder) were charged therein, and they were mixed.

This glue as a binder was mixed with 1,000 g of small pieces of chicken tender meat such that they were uniformly entangled with each other (an amount of TGase was 0.5 U per gram of meat, and that of collagen was 0.01 g on the same basis).

Subsequently, this mixture was put on a retainer, and allowed to stand at 5°C for 2 hours to proceed with the TGase reaction. Then, the reaction product was placed in a freezer of -40°C, and frozen until the evaluation was conducted. As a control, chicken tender meat which was bound in the above-mentioned manner using collagen alone without adding TGase was used.

The frozen bound tender meet fillet was sliced to a thickness of 10 mm. After it was thawed, the binding strength of this fillet in raw state was measured using a rheometer.

The results are described below. That is, when the binding strength of the samples was measured, the control product was not bound at all, hence the binding strength thereof was unmeasurable. Meanwhile, the product of the present invention had the binding strength of 52 g/cm², and it was, therefore, completely processed in the form of a piece of chicken fillet.

Chicken tender meat had usually a low value because it is hard to utilize chicken tender meat as the materials for processed food for the reason that only small pieces of meat are obtained. However, according to the present invention, it was possible to obtain fillet which could become larger chicken steak meat. This experimental result revealed the possibility of the remarkable improvement in the commercial value of the chicken tender meat.

### Example 7

### Production of a fried pork cutlet by a powder coating method:

Seventy grams of collagen (trade name: "SCANPRO T 95"), 30 g of branched dextrin and 6,000 U of TGase were mixed to produce an enzyme preparation for bound food.

This enzyme preparation was placed on a tray to be a fixed thickness or more. Small pieces (approximately 2-cm cubes) of pork loin were placed on this tray, and the surfaces of the small pieces of pork loin were uniformly coated with the enzyme preparation while rolling the pieces of pork loin. The thus-treated small pieces of pork loin were put into a retainer for fried pork cutlet, allowed to stand at room temperature for 2 hours to conduct the enzymatic reaction of TGase, and then frozen overnight in a freezer of -40°C.

The amounts of TGase and collagen adhered to the small pieces of meat were 0.5 U and 0.01 g per gram of meat respectively.

A preparation comprising 70 g of collagen and 30 g of branched dextrin was produced as a control, and coated on small pieces of pork loin. The thus-coated small pieces of pork loin were treated in the same manner as in the product of the present invention to give a fried pork cutlet.

The frozen bound pork was sliced to a thickness of 9 mm. After it was thawed, batter and bread crumb were coated thereon, and the thus-treated pork was fried in oil at 175°C for 5 minutes to obtain a fried pork cutlet.

The invention product and the control product were compared with respect to the battering and crumbing. The organoleptic evaluation of the fried pork cutlet was also conducted.

The results are described below. That is, in the bound pork which was bound using the enzyme preparation of the present invention, the small pieces of meat were not separated from one another even in the process of battering and crumbing, and the obtained fried pork cutlet was the identical to that obtained by using one large piece of pork loin.

On the other hand, in the control product, the small pieces of meat, at a glance, seemed to be bound immediately after the slicing. However, when this product was dipped in a batter solution and bread crumb was pressed thereon, the small pieces of meat were separated from one another, and it was completely impossible to obtain a bound fried pork cutlet just like one large piece of pork loin.

In the results of the organoleptic evaluation, when the invention product was bitten off, the satisfactory meat fibrous feeling was given, and no unpleasant feeling was given.

### Effects of the Invention

According to the present invention, collagen can replace caseins which were indispensable to obtain a satisfactory binding strength.

Consequently, when caseins cannot be used in bound food in view of the indication or the legal regulation, food materials can be bound strongly by TGase upon using a glue formed by adding collagen to ice water as a binder. Further, the binding strength is exactly identical to that given when using caseins as a binder.

In accordance with the present invention, food materials such as pieces of meat can highly be bound without being heated, and a taste and a flavor of the resulting bound food are excellent.

Further, the present invention can provide bound food which can be eaten by consumers who are unable to take in caseins because of an allergy.

## Claims

1. Use of an enzyme preparation for binding pieces of food materials, the enzyme preparation comprising transglutaminase and a collagen as active ingredients, wherein the collagen is extracted from (1) an animal bone and/or an animal skin, (2) the protein fraction having a molecular weight of approximately 40,000 Da or more being more than 70% by weight of the total protein in said collagen, and (3) the protein fraction having a molecular weight of approximately 65,000 Da or more being more than 50% by weight of the total protein in said collagen.

2. A process for producing bound food by reacting pieces of food materials with transglutaminase, wherein collagen is used as a binder, said collagen being in the form of a glue obtained by adding collagen to water of 10°C or less, and said collagen being extracted from (1) an animal bone and/or an animal skin, (2) the protein fraction having a molecular weight of approximately 40,000 Da or more being more than 70% by weight of the total protein in said collagen, and (3) the protein fraction having a molecular weight of approximately 65,000 Da or more being more than 50% by weight of the total protein in said collagen.

3. The process according to claim 2, wherein said water is kept at 5 DEG C or less.

4. The process according to claim 2 or 3, wherein the weight ratio of the water to the collagen is from 8 to 18.

5. The process according to any of the claims 2 to 4, wherein the glue obtained by adding collagen to water contains sodium chloride

6. A bound food material, obtainable by a process according to any one of claims 2 to 5.

## Patentansprüche

1. Verwendung einer Enzymzubereitung zum Binden von Nahrungsmittelstücken, wobei die Enzymzubereitung Transglutaminase und ein Collagen als aktive Bestandteile enthält, wobei das Collagen (1) aus einem Tierknochen und/oder einer Tierhaut, (2) aus der Proteinfraktion, deren Molekulargewicht von etwa 40 000 Dalton oder höher mehr als 70 Gew.-% des Gesamtproteins in dem Collagen ausmacht, und (3) aus der Proteinfraktion extrahiert ist, deren Molekulargewicht von etwa 65 000 Dalton oder höher mehr als 50 Gew.-% des Gesamtproteins des Collagens ausmacht.

2. Verfahren zum Herstellen gebundener Nahrungsmittel durch Umsetzen von Nahrungsmittelstücken mit Transglutaminase, wobei Collagen als Bindemittel eingesetzt wird, wobei das Collagen in der Form eines Haftmittels vorliegt, das durch Zugeben von Collagen zu Wasser von 10°C oder niedriger erhalten wird, und wobei das Collagen (1) aus einem Tierknochen und/oder einer Tierhaut, (2) aus der Proteinfraktion, deren Molekulargewicht von etwa 40 000 Dalton oder höher mehr als 70 Gew.-% des Gesamtproteins in dem Collagen ausmacht, und (3) aus der Proteinfraktion extrahiert ist, deren Molekulargewicht von etwa 65 000 Dalton oder höher mehr als 50 Gew.-% des Gesamtproteins des Collagens ausmacht.

3. Verfahren nach Anspruch 2, wobei das Wasser bei 5°C oder niedriger gehalten wird.

4. Verfahren nach Anspruch 2 oder 3, wobei das Gewichtsverhältnis des Wassers zu dem Collagen 8 bis 18 ist.

5. Verfahren nach einem der Ansprüche 2 bis 4, wobei das durch Zugeben von Collagen zu Wasser erhaltene Haftmittel Natriumchlorid enthält.

6. Gebundenes Nahrungsmittelmaterial, erhältlich durch ein Verfahren nach einem der Ansprüche 2 bis 5.

## Revendications

1. Utilisation d'une préparation enzymatique pour la liaison de morceaux de matières alimentaires, la préparation enzymatique comprenant une transglutaminase et un collagène en tant qu'ingrédients actifs, où le collagène est extrait de (1) un os d'animal et/ou une peau d'animal, (2) la fraction protéinique ayant une masse moléculaire d'approximativement 40 000 Da ou plus représentant plus de 70 % en masse de la protéine totale dans ledit collagène, et (3) la fraction protéinique ayant une masse moléculaire d'approximativement 65 000 Da ou plus représentant plus de 50 % en masse de la protéine totale dans ledit collagène.

2. Procédé pour la production d'un aliment lié par réaction de morceaux de matières alimentaires avec une transglutaminase, où le collagène est utilisé comme liant, ledit collagène étant sous la forme d'une colle obtenue par addition de collagène à de l'eau à 10°C ou moins, et ledit collagène étant extrait de (1) un os d'animal et/ou une peau d'animal, (2) la fraction protéinique ayant une masse moléculaire d'approximativement 40 000 Da ou plus représentant plus de 70 % en masse de la protéine totale dans ledit collagène, et (3) la fraction protéinique ayant une masse moléculaire d'approximativement 65 000 Da ou plus représentant plus de 50 % en masse de la protéine totale dans ledit collagène.

3. Procédé selon la revendication 2, dans lequel ladite eau est maintenue à 5°C ou moins.

4. Procédé selon la revendication 2 ou 3, dans lequel le rapport en masse de l'eau au collagène est de 8 à 18.

5. Procédé selon l'une quelconque des revendications 2 à 4, dans lequel la colle obtenue par addition de collagène à l'eau contient du chlorure de sodium.

6. Matière alimentaire liée, pouvant être obtenue par un procédé selon l'une quelconque des revendications 2 à 5.
